# EUROPEAN PATENT APPLICATION

(11) **EP 4 810 928 A1**
(43) Date of publication of application: **23.09.2026**
(21) Application number: 26164850.5
(22) Date of filing: 16.03.2026
(51) Int. Cl.: G01L 19/06, G01L 19/14

(54) **FLEXIBLE MOLDED SEALING WITH TENSION DEFORMATION AND A FLOATING STORAGE SENSOR BOARD FOR ACCOMMODATING POSITIONAL TOLERANCES OF SENSOR CONDUIT STRUCTURES**

(30) Priority: 17.03.2025 US 202519081427
(71) Applicant: Honeywell International Inc., Charlotte, NC 28202 (US)
(72) Inventor: RUWE, Christian, Charlotte, 28202 (US); KAMP, Christian, Charlotte, 28202 (US); HEYEN, Thomas, Charlotte, 28202 (US)
(74) Representative: Haseltine Lake Kempner LLP

(57) **Abstract**

An apparatus comprising a sealing plate comprising one or more projection apertures, wherein the sealing plate is mounted on a housing component; a sealing gasket configured between the sealing plate and the housing component, wherein the sealing gasket comprises one or more projections that are provided through the one or more projection apertures; and a sensor printed circuit board (PCB) comprising one or more sensor conduit structures, wherein the one or more sensor conduit structures are inserted through the one or more projections.

## Description

### TECHNICAL FIELD

Various embodiments of the present disclosure relate to sensor components, and more particularly to sealing sensor conduit structures within a housing.

### BACKGROUND

The manner in which sensor components are conventionally mounted and assembled may cause a number of problems related to manufacturing and reliability. For example, a conduit-fitted sensor apparatus may comprise a plurality of conduit structures that are subject to substantial positioning tolerances that result from the placement of the plurality of conduit structures on a sensing component and the placement of the sensing component on a printed circuit board (PCB) during the soldering process. Accordingly, the placement of the plurality of conduit structures on the sensing component and the placement of the sensing component on the PCB may cause misalignment of the plurality of conduit structures with respect to a housing, which may result in improper and/or difficult assembly of the conduit-fitted sensor apparatus as well as damage to and/or defect of the conduit-fitted sensor apparatus.

Applicant has identified many technical challenges and difficulties associated with assembling components of sensor apparatuses, such as conduit-fitted sensor apparatuses.

### BRIEF SUMMARY

Various embodiments described herein relate to components, apparatuses, and systems for measuring pressure or other status of gaseous media.

In accordance with various embodiments of the present disclosure, an apparatus is provided. In some embodiments, the apparatus comprises a sealing plate comprising one or more projection apertures, wherein the sealing plate is mounted on a housing component; a sealing gasket configured between the sealing plate and the housing component, wherein the sealing gasket comprises one or more projections that are provided through the one or more projection apertures; and a sensor printed circuit board (PCB) comprising one or more sensor conduit structures, wherein the one or more sensor conduit structures are inserted through the one or more projections.

In some embodiments, the one or more sensor conduit structures comprise sensors that are configured to measure pressure or other status of gaseous media. In some embodiments, the one or more projections comprises respectively corresponding one or more projection channels that are gas-tight. In some embodiments, the one or more projection channels comprise a circumference that is larger than the one or more sensor conduit structures by a predetermined tolerance amount. In some embodiments, the sealing gasket provides a gas-tight seal between a bottom side surface of the sealing plate and the housing component. In some embodiments, the sealing gasket is configured with the sealing plate from a bottom side of the sealing plate such that a top-side surface of the sealing gasket is flush with a bottom-side surface of the sealing plate. In some embodiments, the one or more projections comprise a flexible gas-sealing material. In some embodiments, the one or more projection apertures are sized based on a predetermined tolerance amount for accommodating variances in positioning of the one or more sensor conduit structures while providing a gas-tight seal.

In some embodiments, the housing component comprises one or more ports that are coupled to the one or more projections. In some embodiments, the one or more sensor conduit structures comprise one or more pathways that lead to one or more sensors embedded on the sensor PCB. In some embodiments, the sensor PCB comprises one or more mounting through holes, wherein the one or more mounting through holes are sized such that the sensor PCB is allowed to float laterally or within a horizontal plane with respect to a mounting fixture on the housing component. In some embodiments, the sealing gasket comprises a seal lip that is configured to provide a gas-tight seal with at least a portion of the housing component. In some embodiments, the seal lip comprises one or more partitions that respectively correspond to one or more projection channels within the one or more projections such that the one or more projection channels are independently routed to respectively corresponding one or more ports of the housing component.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 depicts an exploded view of a conduit-fitted sensor apparatus in accordance with some embodiments of the present disclosure;
FIG. 2 depicts a bottom view of a floating sensor printed circuit board (PCB) in accordance with some embodiments of the present disclosure;
FIG. 3 depicts a top cross-sectional view of the housing component in accordance with some embodiments of the present disclosure;
FIG. 4A depicts a top prospective view of the sealing gasket in accordance with some embodiments of the present disclosure;
FIG. 4B depicts a bottom prospective view of the sealing gasket in accordance with some embodiments of the present disclosure;
FIG. 4C depicts a side view of the sealing gasket in accordance with some embodiments of the present disclosure;
FIG. 4D depicts a top view of the sealing gasket in accordance with some embodiments of the present disclosure;
FIG. 5A depicts a side view of the sealing plate in accordance with some embodiments of the present disclosure;
FIG. 5B depicts a top view of the sealing plate in accordance with some embodiments of the present disclosure; and
FIG. 6 depicts a cross sectional view of the conduit-fitted sensor apparatus in accordance with some embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc., are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with assembling components of sensor apparatuses, such as conduit-fitted sensor apparatuses. Various embodiments of the present disclosure overcome such technical challenges and difficulties in assembling conduit-fitted sensor apparatuses and provide various technical advancements and improvements. In accordance with various embodiments of the present disclosure, components of example conduit-fitted sensor apparatuses for improving assembly of conduit-fitted sensor apparatuses are disclosed.

In some embodiments, to compensate for manufacturing-related tolerances of sensor conduit structures on a sensor package, a flexible molded sealing in combination with a floating sensor printed circuit board (PCB) are provided. In some embodiments, a conduit-fitted sensor comprises a plurality of sensor conduit structures that configured are with the flexible molded sealing and a sealing plate that is mounted onto a housing component, wherein the flexible molded sealing is configured between the plurality of sensor conduit structures and the sealing plate. In some embodiments, the flexible molded sealing comprises a sealing gasket that is configured to fit over the outer circumferences of the plurality of sensor conduit structures. In some embodiments, the floating sensor PCB comprises oversized mounting apertures that allow for floating of the floating sensor PCB within the housing component. Accordingly, the flexible molded sealing and the floating sensor PCB may compensate for positioning tolerances between the plurality of sensor conduit structures and the housing component.

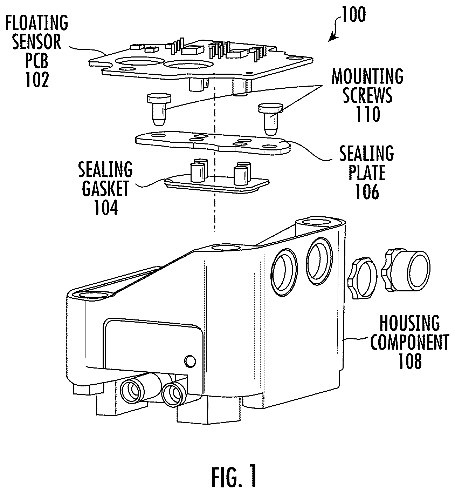

Referring now to FIG. 1, an exploded view of a conduit-fitted sensor apparatus 100 is depicted in accordance with some embodiments of the present disclosure. The conduit-fitted sensor apparatus 100 comprises a floating sensor PCB 102. The floating sensor PCB 102 may comprise hardware circuitry, such as sensors, that are configured to detect and/or measure pressure or other status of gaseous media. The conduit-fitted sensor apparatus 100 further comprises a sealing plate 106 and a sealing gasket 104 that in a combined configuration, provide for a gas-tight seal between certain hardware circuitry (e.g., sensor conduit structures) of the floating sensor PCB 102 and a housing component 108. The floating sensor PCB 102 is configured on a top side of the sealing plate 106 such that at least a portion of the floating sensor PCB 102 (e.g., one or more sensor conduit structures) is inserted through projections of the sealing gasket 104, wherein the projections provide air-tight channels through one or more projection apertures of the sealing plate 106.

The sealing gasket 104 is configured with the sealing plate 106 from a bottom side of the sealing plate 106 such that (i) a surface of the top side of the sealing gasket 104 may be flush with a surface of the bottom side of the sealing plate 106 and (ii) projections of the sealing gasket 104 are fitted through one or more projection apertures of the sealing plate 106. The sealing gasket 104 may also provide a gas-tight seal between the bottom surface of the sealing plate 106 and at least a portion of the housing component 108 when mounted thereon. The sealing gasket 104 may comprise a flexible material, such as rubber, silicone, or any other material suitable for providing gas-tight sealing. The sealing plate 106 is mounted to the housing component 108 via mounting screws 110 upon assembly, thereby compressing the sealing gasket 104 between the sealing plate 106 and the housing component 108.

As disclosed herewith, the sealing gasket 104 comprises projections that provide gas-tight channels (e.g., projection channels) for portions of the floating sensor PCB 102 that are inserted into the projections configured through the projection apertures of the sealing plate 106. In additional to providing gas-tight seals, the projections may accommodate for a margin of positional tolerance between differences in the locations of the projection apertures of the sealing plate 106 and the locations of the portion of the floating sensor PCB 102 that are inserted through the projections. For example, the projections may allow for the projection apertures of the sealing plate 106 to be sized based on a predetermined tolerance amount for accommodating variances in positioning of the floating sensor PCB 102, sensors of the floating sensor PCB 102, or a portion of the floating sensor PCB 102 (e.g., one or more sensor conduit structures) that is inserted through the projections, while providing an gas-tight seal. That is, the projections may allow the portion of the floating sensor PCB 102 to fit the projections within a given margin provided by the projection apertures of the sealing plate 106 while still maintaining a gas seal.

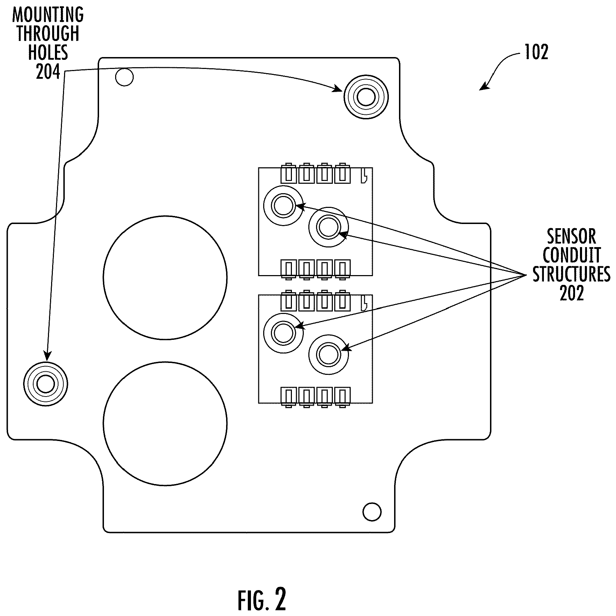

FIG. 2 depicts a bottom view of a floating sensor PCB 102 in accordance with some embodiments of the present disclosure. The floating sensor PCB 102 comprises sensor conduit structures 202 that are portions of the floating sensor PCB 102 that may be inserted into projections of the sealing gasket 104 provided through the projection apertures of the sealing plate 106. In some embodiments, the sensor conduit structures 202 comprise pathways that lead to sensors embedded on the floating sensor PCB 102. The floating sensor PCB 102 further comprises mounting through holes 204. The mounting through holes 204 may be sized such that the floating sensor PCB 102 may float laterally or within a horizontal plane with respect to a mounting fixture on the housing component 108, thereby accommodating positional tolerances between the floating sensor PCB 102 and the housing component 108.

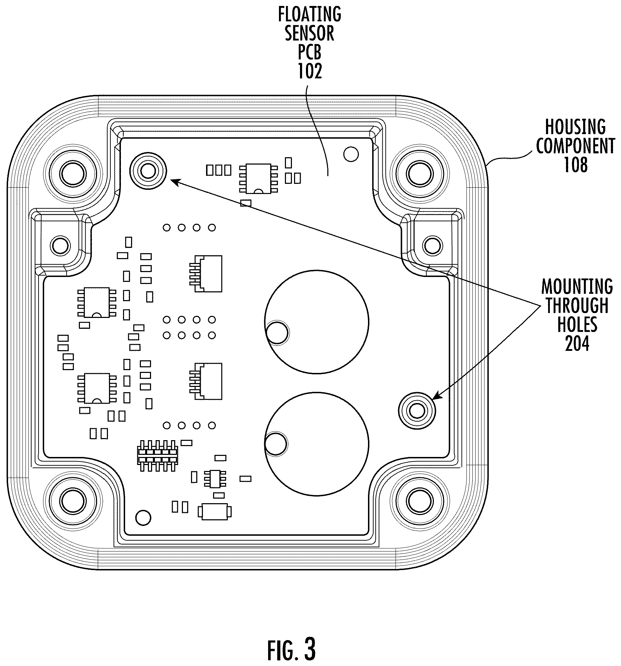

FIG. 3 depicts a top cross-sectional view of the housing component 108 in accordance with some embodiments of the present disclosure. As depicted, the bottom side (e.g., comprising the sensor conduit structures 202) of the floating sensor PCB 102 is mounted facing down towards a base of the housing component 108.

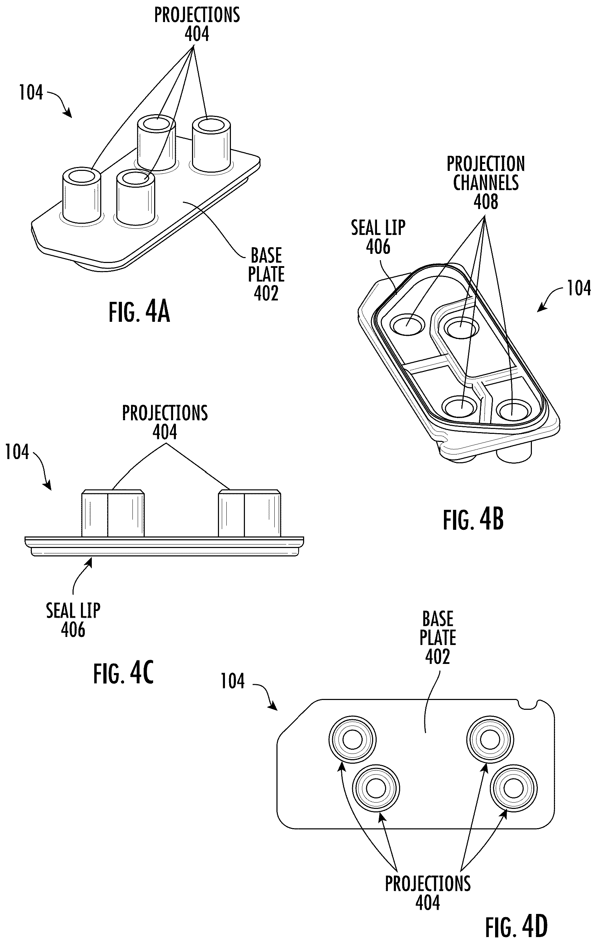

FIG. 4A depicts a top prospective view of the sealing gasket 104 in accordance with some embodiments of the present disclosure. The sealing gasket 104 comprises a base plate 402 and a plurality of projections 404. The top side of the base plate 402 may be configured in contact with the sealing plate 106 while the bottom side of the base plate 402 may be configured in contact with the housing component 108.

FIG. 4B depicts a bottom prospective view of the sealing gasket 104 in accordance with some embodiments of the present disclosure. The bottom side of the base plate 402 comprises a seal lip 406 that may be configured to provide a gas-tight seal with at least a portion of the housing component 108. In some embodiments, the seal lip 406 comprises a plurality of partitions that respectively correspond to a plurality of projection channels 408 within the plurality of projections 404 such that each of the plurality of projection channels 408 are independently routed to respectively corresponding ports of the housing component 108.

FIG. 4C depicts a side view of the sealing gasket 104 in accordance with some embodiments of the present disclosure. Configuring the top side of the base plate 402 with the sealing plate 106 may further comprise aligning and inserting the plurality of projections 404 into projection apertures of the sealing plate 106. During mounting of the floating sensor PCB 102 onto the housing component 108, the sensor conduit structures 202 may be fitted into the plurality of projections 404. The plurality of projections 404 may provide a flexible seal between the sensor conduit structures 202 and the projection apertures of the sealing plate 106 to accommodate for positional tolerances of the sensor conduit structures 202.

FIG. 4D depicts a top view of the sealing gasket 104 in accordance with some embodiments of the present disclosure. According to various embodiments of the present disclosure, the projection channels 408 within the plurality of projections 404 are sized to accommodate positional tolerances of the sensor conduit structures 202. For example, the projection channels 408 may comprise a circumference that is larger than the sensor conduit structures 202 by a predetermined tolerance amount to accommodate for variances in positioning of the sensor conduit structures 202.

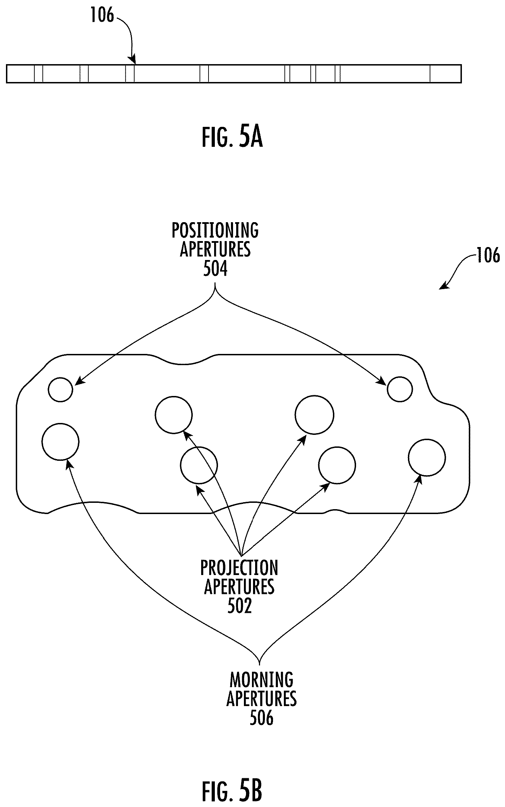

FIG. 5A depicts a side view of the sealing plate 106 in accordance with some embodiments of the present disclosure. The sealing plate 106 comprises a rigid structure and at least a substantially flat and/or level bottom surface that is complementary for configuration in contact with the base plate 402. Mounting the sealing plate 106 to the housing component 108 may cause the sealing plate 106 to compress against the base plate 402 of the sealing gasket 104, which in turn, may cause compression of the seal lip 406 against the housing component 108.

FIG. 5B depicts a top view of the sealing plate 106 in accordance with some embodiments of the present disclosure. The sealing plate 106 comprises a plurality of projection apertures 502 that may be fitted with the plurality of projections 404 for providing gas-tight seals to sensor conduit structures 202 configured therein. The sealing plate 106 comprises a plurality of positioning apertures 504 that may be used for positioning the sealing plate 106 with (e.g., alignment pins of) the housing component 108. The sealing plate 106 further comprises mounting apertures 506 that may be used for mounting the sealing plate 106 onto the housing component 108 (e.g., with screws).

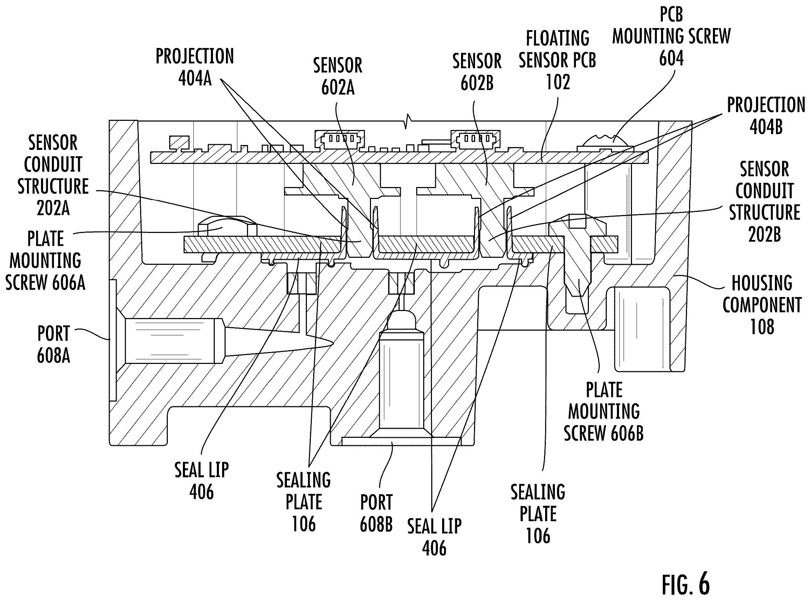

FIG. 6 depicts a cross sectional view of the conduit-fitted sensor apparatus 100 in accordance with some embodiments of the present disclosure. As depicted, the sealing plate 106 is mounted onto the housing component 108 with a seal lip 406 configured therebetween. The seal lip 406 may be compressed between a bottom surface of the sealing plate and the housing component 108 via tightening of the plate mounting screws 606A and 606B.

The floating sensor PCB 102 is also mounted onto the housing component 108 such that sensor conduit structure 202A and sensor conduit structure 202B of sensor 602A and 602B, respectively, are configured above the sealing plate 106. In particular, mounting the floating sensor PCB 102 onto the housing component 108 comprises aligning and/or inserting the sensor conduit structure 202A and the sensor conduit structure 202B into the projection 404A and the projection 404B, respectively. The floating sensor PCB 102 may be fixed into position via the PCB mounting screw 604.

Accordingly, the sensor conduit structure 202A is coupled to a port 608A, and similarly, the sensor conduit structure 202B is coupled to a port 608B. The seal lip 406 in combination with the projection 404A and projection 404B may provide gas-tight seals between the ports 608A and 608B and the sensor conduit structures 202A and 202B, respectively.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. An apparatus comprising:
a sealing plate comprising one or more projection apertures, wherein the sealing plate is mounted on a housing component;
a sealing gasket configured between the sealing plate and the housing component, wherein the sealing gasket comprises one or more projections that are provided through the one or more projection apertures; and
a sensor printed circuit board (PCB) comprising one or more sensor conduit structures, wherein the one or more sensor conduit structures are inserted through the one or more projections.

2. The apparatus of claim 1, wherein the one or more sensor conduit structures comprise sensors that are configured to measure pressure or a status of gaseous media.

3. The apparatus of claim 1, wherein the one or more projections comprises respectively corresponding one or more projection channels that are gas-tight.

4. The apparatus of claim 3, wherein the one or more projection channels comprise a circumference that is larger than the one or more sensor conduit structures by a predetermined tolerance amount.

5. The apparatus of claim 1, wherein the sealing gasket provides a gas-tight seal between a bottom side surface of the sealing plate and the housing component.

6. The apparatus of claim 1, wherein the sealing gasket is configured with the sealing plate from a bottom side of the sealing plate such that a top-side surface of the sealing gasket is flush with a bottom-side surface of the sealing plate.

7. The apparatus of claim 1, wherein the one or more projections comprise a flexible gas-sealing material.

8. The apparatus of claim 1, wherein the one or more projection apertures are sized based on a predetermined tolerance amount for accommodating variances in positioning of the one or more sensor conduit structures while providing a gas-tight seal.

9. The apparatus of claim 1, wherein the housing component comprises one or more ports that are coupled to the one or more projections.

10. The apparatus of claim 1, wherein the one or more sensor conduit structures comprise one or more pathways that lead to one or more sensors embedded on the sensor PCB.

11. The apparatus of claim 1, wherein the sensor PCB comprises one or more mounting through holes, wherein the one or more mounting through holes are sized such that the sensor PCB is allowed to float laterally or within a horizontal plane with respect to a mounting fixture on the housing component.

12. The apparatus of claim 1, wherein the sealing gasket comprises a seal lip that is configured to provide a gas-tight seal with at least a portion of the housing component.

13. The apparatus of claim 12, wherein the seal lip comprises one or more partitions that respectively correspond to one or more projection channels within the one or more projections such that the one or more projection channels are independently routed to respectively corresponding one or more ports of the housing component.
